# EUROPEAN PATENT APPLICATION

(11) **EP 1 708 529 A1**
(43) Date of publication of application: **04.10.2006**
(21) Application number: 05290712.8
(22) Date of filing: 31.03.2005
(51) Int. Cl.: H04Q 7/38

(54) **Uplink resource allocation in dual transfer mode**

(71) Applicant: MOTOROLA INC., Schaumburg, IL 60196 (US)
(72) Inventor: Baglin, Matthieu, 31100 Toulouse (FR); Marco, Olivier, 31400 Toulouse, Haute-Garonne (FR)
(74) Representative: Joly, Jean-Jacques

(57) **Abstract**

A method (1300) for uplink resource allocation in dual transfer mode in a mobile station includes receiving (1310) an uplink state flag (USF) during a circuit switched downlink timeslot, decoding (1320) a number N of packet-switched timeslots available during a next uplink period, switching (1350) to transfer mode, and transmitting (1360) on N packet-switched timeslots in the next uplink period. By incorporating a USF into a circuit-switched timeslot, only one downlink timeslot is required (e.g., a combined circuit-switched and USF timeslot) as opposed to requiring two timeslots (e.g., a circuit-switched timeslot and a timeslot for the USF). If the number N is less than the maximum allowable packet-switched timeslots available during the next uplink period, the mobile station "listens" (1340) on the first free timeslot of the next downlink period (which immediately follows the circuit-switched timeslot of the next downlink period) before switching (1350) to transfer mode and transmitting (1360).

## Description

### FIELD OF THE DISCLOSURE

This disclosure relates generally to transmitting both circuit-switched data and packet-switched data in a time division multiplex environment.

### BACKGROUND OF THE DISCLOSURE

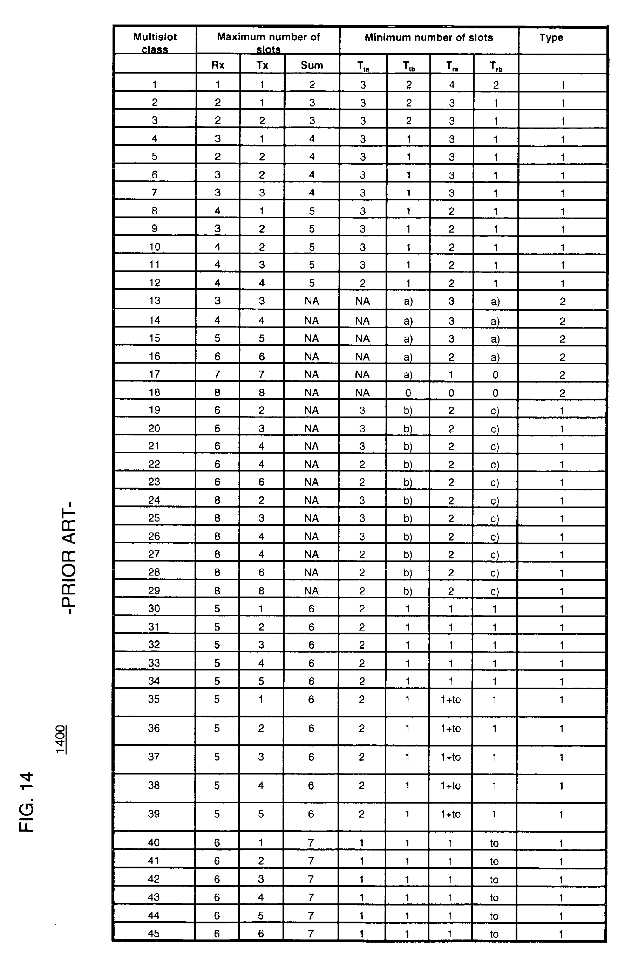

Variations of Global System for Mobile communication (GSM) systems, such as General Packet Radio Service (GPRS) and Enhanced Data Rates for Global/GSM Evolution (EDGE), allow transmission of both circuit-switched data and packet-switched data in different timeslots of a single block. When a mobile station supports the use of multiple timeslots, it needs to belong to a "multislot class" in order to properly communicate with GSM system infrastructure. The Third Generation Partnership Project (3GPP) has defined Dual Transfer Mode (DTM) in 3GPP TS 43.055, which supports multislot classes up to class 11 in its latest version V6.8.0. Additional multislot classes for non-DTM capable mobile stations (up to multislot class 45) are defined in 3GPP TS 45.002 Annex B, reproduced in prior art FIG. 14.

Various schemes, such as "dynamic allocation," "extended dynamic allocation," and "special extended dynamic allocation" have been proposed to support DTM multislot classes. However, it would be beneficial to modify existing DTM protocols to support multislot classes greater than 11 so that the additional multislot classes in 3GPP TS 45.002 Annex B can be extended and applied to DTM capable mobile stations. The various aspects, features and advantages of the disclosure will become more fully apparent to those having ordinary skill in the art upon careful consideration of the following Drawings and accompanying Detailed Description.

### BRIEF DESCRIPTION OF THE DRAWINGS

FIG. 1 shows an example of an ongoing multislot class 12 dual transfer mode (DTM) transfer allowing a downlink circuit-switched timeslot, an uplink circuit-switched timeslot, and three uplink packet-switched timeslots in accordance with a first preferred embodiment.

FIG. 2 shows an example of an ongoing multislot class 12 dual transfer mode (DTM) transfer allowing a downlink circuit-switched timeslot, an uplink circuit-switched timeslot, and two uplink packet-switched timeslots in accordance with a second preferred embodiment.

FIG. 3 shows an example of an ongoing multislot class 12 dual transfer mode (DTM) transfer allowing a downlink circuit-switched timeslot, an uplink circuit-switched timeslot, and one uplink packet-switched timeslot in accordance with a third preferred embodiment.

FIG. 4 shows an example of an ongoing multislot class 34 dual transfer mode (DTM) transfer allowing a downlink circuit-switched timeslot, an uplink circuit-switched timeslot, and four uplink packet-switched timeslots in accordance with a fourth preferred embodiment.

FIG. 5 shows an example of an ongoing multislot class 34 dual transfer mode (DTM) transfer allowing a downlink circuit-switched timeslot, an uplink circuit-switched timeslot, and three uplink packet-switched timeslots in accordance with a fifth preferred embodiment.

FIG. 6 shows an example of an ongoing multislot class 34 dual transfer mode (DTM) transfer allowing a downlink circuit-switched timeslot, an uplink circuit-switched timeslot, and two uplink packet-switched timeslots in accordance with a sixth preferred embodiment.

FIG. 7 shows an example of an ongoing multislot class 34 dual transfer mode (DTM) transfer allowing a downlink circuit-switched timeslot, an uplink circuit-switched timeslot, and one uplink packet-switched timeslot in accordance with a seventh preferred embodiment.

FIG. 8 shows an example of an ongoing multislot class 33 or 34 DTM transfer allowing a downlink circuit-switched timeslot, an uplink circuit-switched timeslot, three uplink packet-switched timeslots, and one downlink packet-switched timeslot in accordance with an eighth preferred embodiment.

FIG. 9 shows an example of an ongoing multislot class 33 or 34 DTM transfer allowing a downlink circuit-switched timeslot, an uplink circuit-switched timeslot, two uplink packet-switched timeslots and one downlink packet-switched timeslot in accordance with a ninth preferred embodiment.

FIG. 10 shows an example of an ongoing multislot class 33 or 34 DTM transfer allowing a downlink circuit-switched timeslot, an uplink circuit-switched timeslot, one uplink packet-switched timeslot, and one downlink packet-switched timeslot in accordance with a tenth preferred embodiment.

FIG. 11 shows an example of an ongoing multislot class 33 or 34 DTM transfer allowing a downlink circuit-switched timeslot, an uplink circuit-switched timeslot, no unlink packet-switched timeslots, and one downlink racket-switched timeslot in accordance with an eleventh preferred embodiment.

FIG. 12 shows an exemplary simplified block diagram of a mobile station capable of implementing the DTM transfers shown in FIGs. 1-11.

FIG. 13 shows an exemplary flowchart for implementing the DTM transfers shown in FIGs. 1-11 in the mobile station shown in FIG. 12.

FIG. 14 is a prior art chart showing the forty-five multislot classes currently in 3GPP TS 45.002 Annex B.

### DETAILED DESCRIPTION OF THE PREFERRED EMBODIMENTS

A method for uplink resource allocation in dual transfer mode in a mobile station includes receiving an uplink state flag (USF) during a circuit switched downlink timeslot, decoding a number N of packet-switched timeslots available during a next uplink period, switching to transfer mode, and transmitting on N packet-switched timeslots in the next uplink period. By incorporating a USF into a circuit-switched timeslot, only one downlink timeslot is required (e.g., a combined circuit-switched and USF timeslot) as opposed to requiring two timeslots (e.g., a circuit-switched timeslot and a timeslot for the USF). The uplink state flag can be implemented as a training sequence for a circuit-switched timeslot in accordance with 3GPP TS 45.002 section 5.2.3. If the number N is less than the maximum allowable packet-switched timeslots available during the next uplink period, the mobile station "listens" on the first free timeslot of the next downlink period (which immediately follows the circuit-switched timeslot of the next downlink period) before switching to transfer mode and transmitting on the latter N available packet-switched timeslots.

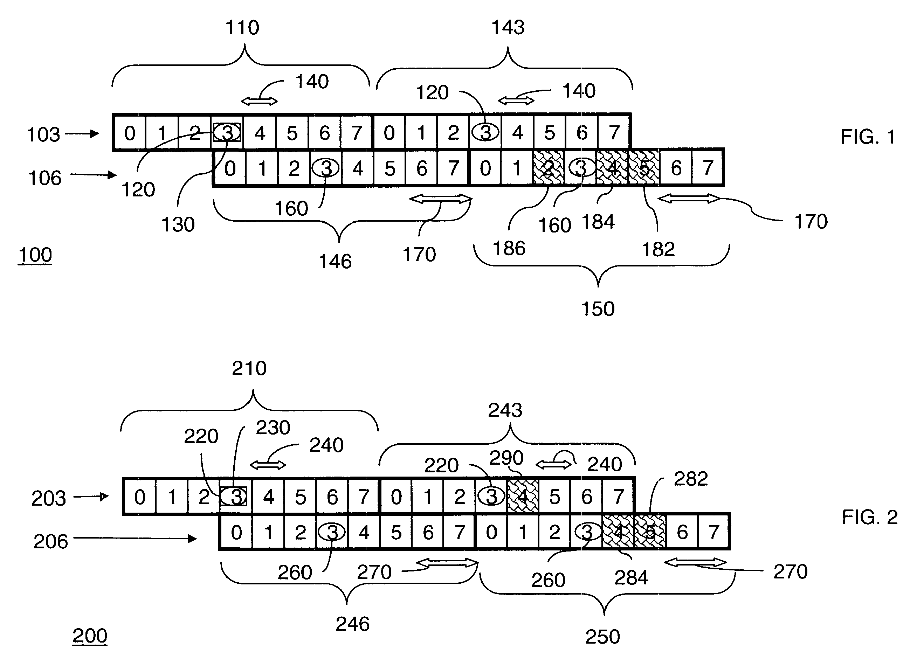

FIG. 1 shows an example **100** of an ongoing multislot class 12 dual transfer mode (DTM) transfer allowing a downlink circuit-switched timeslot, an uplink circuit-switched timeslot, and three uplink packet-switched timeslots in accordance with a first preferred embodiment. According to 3GPP TS 45.002 Annex B, reproduced in prior art FIG. 14, multislot class 12 has a maximum number (Rx) of four transmit timeslots. Additionally, Annex B specifies that the time needed for a mobile station to get ready to transmit (T_{tb}) is equivalent to 1 timeslot, and the time needed for a mobile station to get ready to receive (Tᵣₐ) is equivalent to 2 timeslots.

FIG. 1 shows a GSM receive stream **103** with a block n **110** of eight timeslots 0-7 and one subsequent block n+1 **143.** For the sake of clarity, other receive blocks are not shown. Each receive block has a circuit-switched timeslot 120 on timeslot 3. Also shown is a GSM transmit stream **106** with a block n+1 **150** of eight timeslots 0-7 and one previous block n **146.** For the sake of clarity, other transmit blocks are not shown. Each transmit block also has a circuit-switched timeslot **160** on timeslot 3. Note that the transmit stream **106** is offset from the receive stream **103** such that timeslot 0 of the transmit stream **106** is aligned with the circuit-switched timeslot **120** of its equivalent block in the receive stream **103.** For the duration of the communication session in this example, a dedicated voice channel will be implemented on the circuit-switched timeslot 3 of both the transmit and receive streams. In this example, a base station in communication with the mobile station performing the multislot class 12 DTM transfer allocates uplink timeslots 2, 4, and 5 as packet-switched timeslots in a first assignment allocation. Note that the maximum number of uplink timeslots (Tx) is four in multislot class 12, and the four timeslots include the single circuit-switched timeslot 3 and up to three packet-switched timeslots 2, **4**, and 5.

During the circuit-switched timeslot **120,** the base station in communication with the mobile station performing the multislot class 12 DTM transfer sends an uplink state flag (USF) **130** to inform the mobile station of which timeslots to use to transfer packet-switched data in the next uplink block n+1 **150.** In this example, the USF **130** indicates that three uplink packet-switched timeslots are allowed. This would be the maximum number of uplink packet-switched timeslots allowed in multislot class 12. Thus, in the next uplink block n+1 150, the mobile station sends packet-switched data on all the allocated packet-switched timeslots **186, 184, 182.** Note that no transmission can be made during downlink timeslot 4 (uplink timeslot 1) because multislot class 12 dictates that time period T_{tb} **140** is required to switch the mobile station from receive mode to transmit mode. Also, no transmission can be made during uplink timeslots 6-7 (downlink timeslots 1-2) because multislot class 12 dictates that time period Tᵣₐ **170** is required to switch the mobile station from transmit mode to receive mode.

The USF **130** is transmitted on the downlink circuit-switched timeslot of the dedicated voice channel as one or more training sequences in accordance with 3GPP TS 45.002 section 5.2.3, which specifies eight training code sequences. Thus, each training code sequence can also be used to provide a USF with a value (N) that indicates how many packet-switched timeslots are available to the mobile station during the next block period. In this example, a USF **130** with N=3 is received during block n **110** of the downlink stream **103** and thus the mobile station transmits on all three available uplink packet-switched timeslots **186, 184, 182** of the next block n+1 **150** in the uplink stream **106.** Note that in this situation where the maximum number of uplink packet-switched timeslots are used, there is no opportunity for the mobile station to receive signaling data over a downlink timeslot; however, the next two embodiments provide examples where the mobile station can receive signaling data over a downlink timeslot.

FIG. 2 shows an example **200** of an ongoing multislot class 12 dual transfer mode (DTM) transfer allowing a downlink circuit-switched timeslot, an uplink circuit-switched timeslot, and two uplink packet-switched timeslots in accordance with a second preferred embodiment. Like FIG. 1, FIG. 2 shows a GSM receive stream **203** with a block n **210** of eight timeslots 0-7 and one subsequent block n+1 **243.** For the sake of clarity, other receive blocks are not shown. Each receive block has a circuit-switched timeslot **220** on timeslot 3. Also shown is a GSM transmit stream **206** with a block n+1 **250** of eight timeslots 0-7 and one previous block n **246.** For the sake of clarity, other transmit blocks are not shown. Each transmit block also has a circuit-switched timeslot **260** on timeslot 3. Note that the transmit stream **206** is offset from the receive stream **203** such that timeslot 0 of the transmit stream **206** is aligned with the timeslot 3 of its equivalent block in the receive stream **203.** For the duration of the communication session in this example, a dedicated voice channel will be implemented on the circuit-switched timeslot 3 of both the transmit and receive streams. In this example, a base station in communication with the mobile station performing the multislot class 12 DTM transfer allocates uplink timeslots 2, 4, and 5 as packet-switched timeslots in a first assignment allocation.

During the circuit-switched timeslot **220,** the base station sends an uplink state flag (USF) **230** to inform the mobile station of which timeslots to use to transfer packet-switched data in the next uplink block n+1 **250.** In this example, the USF **230** indicates that two uplink packet-switched timeslots are allowed. This would be less than the maximum number of uplink packet-switched timeslots allowed in multislot class 12. In this situation, the mobile station "listens" for signaling data on the timeslot **290** following the circuit-switched timeslot 3 of the next receive block n+1 **243** before switching from receive mode to transmit mode during time period T_{tb} **240**, before transmitting on circuit-switched timeslot 3 **260** and packet-switched timeslots **284, 282** before switching back to receive mode during time period Tᵣₐ **270.** Note that, when fewer than the maximum number of slots (Sum, shown in FIG. 14) for a particular multislot class is available according to the number N of the USF, packet-switched data is sent on the latter timeslots of the next block **250.** This allows the mobile station to "listen" for signaling data an earlier timeslot of the next block **243.**

As in FIG. 1, the USF **230** is transmitted on the downlink circuit-switched timeslot of the dedicated voice channel as one or more training sequences in accordance with 3GPP TS 45.002 section 5.2.3. A value (N) encoded into the USF **230** indicates how many packet-switched timeslots are available to the mobile station during the next block period. In this example, a USF **230** with N=2 is received during block n **210** of the downlink stream **203** and thus the mobile station "listens" during the first available downlink timeslot **290** of the next downlink block **243** and transmits on the other two available uplink packet-switched timeslots **284,** 282 of the next block n+1 **250** in the uplink stream **206.**

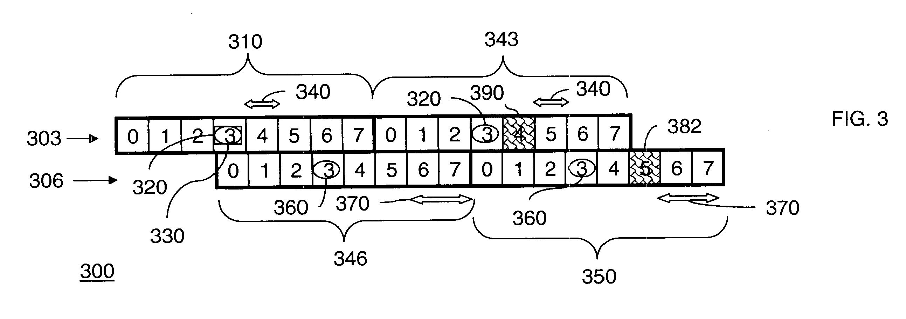

FIG. 3 shows an example **300** of an ongoing multislot class 12 dual transfer mode (DTM) transfer allowing a downlink circuit-switched timeslot, an uplink circuit-switched timeslot, and one uplink packet-switched timeslot in accordance with a third preferred embodiment. Like FIG. 1, FIG. 3 shows a GSM receive stream **303** with a block n **310** of eight timeslots 0-7 and one subsequent block n+1 **343.** For the sake of clarity, other receive blocks are not shown. Each receive block has a circuit-switched timeslot **320** on timeslot 3. Also shown is a GSM transmit stream **306** with a block n+1 **350** of eight timeslots 0-7 and one previous block n **346.** For the sake of clarity, other transmit blocks are not shown. Each transmit block also has a circuit-switched timeslot **360** on timeslot 3. For the duration of the communication session in this example, a dedicated voice channel will be implemented on the circuit-switched timeslot 3 of both the transmit and receive streams. Also, a base station in communication with the mobile station performing the multislot class 12 DTM transfer allocates uplink timeslots 2, 4, and 5 as packet-switched timeslots in a first assignment allocation.

During the downlink circuit-switched timeslot 320, the base station sends an uplink state flag (USF) **330** to inform the mobile station of which timeslots to use to transfer packet-switched data in the next uplink block n+1 **350.** In this example, the USF **330** has a value (N) equal to 1, which indicates that one uplink packet-switched timeslot is allowed. This would be less than the maximum number of uplink packet-switched timeslots allowed in multislot class 12. In this situation, the mobile station "listens" for signaling data on the timeslot **390** following the circuit-switched timeslot 3 of the next receive block n+1 **343** before switching from receive mode to transmit mode during time period T_{tb} **340,** before transmitting on circuit-switched timeslot 3 **360** and packet-switched timeslot **382** before switching back to receive mode during time period Tᵣₐ **370.**

As in FIG. 1, the USF **330** is transmitted on the downlink circuit-switched timeslot of the dedicated voice channel as one or more training sequences. In this example, a USF **330** with N=1 is received during block n **310** of the downlink stream 303 and thus the mobile station "listens" during the first available downlink timeslot **390** of the next downlink block **343** and transmits on the last of the two available uplink packet-switched timeslots **382** of the next block n+1 **350** in the uplink stream **306.** When fewer than the maximum number of slots (Sum, shown in FIG. 14) for a particular multislot class is available according to the number N of the USF, packet-switched data is sent on the latter timeslots of the next block **350.** This allows the mobile station to "listen" for signaling data an earlier timeslot of the next block **343.**

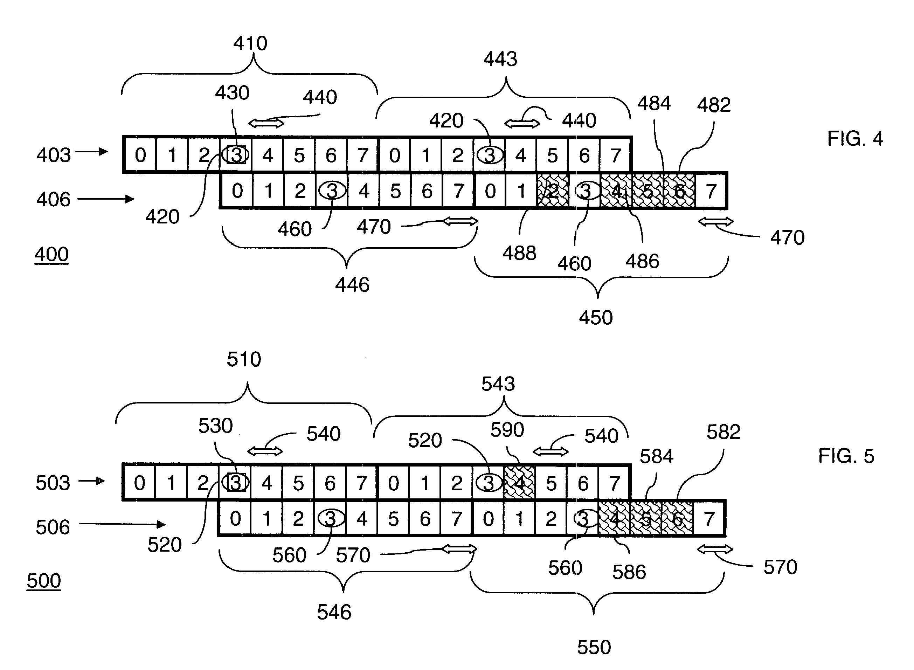

FIG. 4 shows an example **400** of an ongoing multislot class **34** dual transfer mode (DTM) transfer allowing a downlink circuit switched timeslot, an uplink circuit-switched timeslot, and four uplink packet-switched timeslots in accordance with a fourth preferred embodiment. According to 3GPP TS 45.002 Annex B, reproduced in prior art FIG. 14, multislot class 34 has a maximum number (Rx) of five transmit timeslots. Additionally, Annex B specifies that the time needed for a mobile station to get ready to transmit (T_{tb}) is equivalent to 1 timeslot, and the time needed for a mobile station to get ready to receive (Tᵣₐ) is equivalent to 1 timeslot.

FIG. 4 shows a GSM receive stream **403** with a block n **410** of eight timeslots 0-7 and one subsequent block n+1 **443.** For the sake of clarity, other receive blocks are not shown. Each receive block has a circuit-switched timeslot **420** on timeslot 3. Also shown is a GSM transmit stream **406** with a block n+1 **450** of eight timeslots 0-7 and one previous block n **446.** For the sake of clarity, other transmit blocks are not shown. Each transmit block also has a circuit-switched timeslot **460** on timeslot 3. Note that the transmit stream **406** is offset from the receive stream **403** such that timeslot 0 of the transmit stream **406** is aligned with the timeslot 3 of its equivalent block in the receive stream **403.** For the duration of the communication session in this example, a dedicated voice channel will be implemented on the circuit-switched timeslot 3 of both the transmit and receive streams. Also, a base station in communication with the mobile station performing the multislot class 34 DTM transfer allocates uplink timeslots 2, 4, 5, and 6 as packet-switched timeslots in a first assignment allocation. Note that the maximum number of uplink timeslots (Tx) is five in multislot class 34, and the five slots include the single circuit-switched timeslot 1 and up to four packet-switched timeslots 2, 4, 5, and 6.

During the circuit-switched timeslot **420,** the base station in communication with the mobile station performing the multislot class 34 DTM transfer sends an uplink state flag (USF) **430** to inform the mobile station of which timeslots to use to transfer packet-switched data in the next uplink block n+1 **450.** In this example, the USF **430** indicates that four uplink packet-switched timeslots are allowed. This would be the maximum number of uplink packet-switched timeslots allowed in multislot class 34. Thus, in the next uplink block n+1 **450,** the mobile station sends packet-switched data on all the allocated packet-switched timeslots **488, 486, 484, 482.** Note that no transmission can be made during downlink timeslot 4 (uplink timeslot 1) because multislot class 34 dictates that time period T_{tb} **440** is required to switch the mobile station from receive mode to transmit mode. Also, no transmission can be made during uplink timeslot 7 (downlink timeslot 2) because multislot class 34 dictates that time period Tᵣₐ 470 is required to switch the mobile station from transmit mode to receive mode.

The USF **430** is transmitted on the downlink circuit-switched timeslot of the dedicated voice channel as one or more training sequences in accordance with 3GPP TS 45.002 section 5.2.3., which specifies eight training code sequences. Thus, each training code sequence can also be used to provide a USF with a value (N) that indicates how many packet-switched timeslots are available to the mobile station during the next block period. In this example, a USF **430** with N=4 is received during block n **410** of the downlink stream **403** and thus the mobile station transmits on all four available uplink packet-switched timeslots **488, 486, 484, 482** of the next block n+1 **450** in the uplink stream **406.**

FIG. 5 shows an example **500** of an ongoing multislot class 34 dual transfer mode (DTM) transfer allowing a downlink circuit-switched timeslot, an uplink circuit-switched timeslot, and three uplink packet-switched timeslots in accordance with a fifth preferred embodiment. Like FIG. 4, FIG. 5 shows a GSM receive stream **503** with a block n **510** of eight timeslots 0-7 and one subsequent block n+1 **543.** For the sake of clarity, other receive blocks are not shown. Each receive block has a circuit-switched timeslot **520** on timeslot 3. Also shown is a GSM transmit stream **506** with a block n+1 **550** of eight timeslots 0-7 and one previous block n **546.** For the sake of clarity, other transmit blocks are not shown. Each transmit block also has a circuit-switched timeslot **560** on timeslot 3. Note that the transmit stream **506** is offset from the receive stream **503** such that timeslot 0 of the transmit stream **506** is aligned with the circuit-switched timeslot **520** of its equivalent block in the receive stream **503.** For the duration of the communication session in this example, a dedicated voice channel will be implemented on the circuit-switched timeslot 3 of both the transmit and receive streams. Also, a base station in communication with the mobile station performing the multislot class 34 DTM transfer allocates uplink timeslots 2,4,5, and 6 as packet-switched timeslots in a first assignment allocation.

During the circuit-switched timeslot **520,** the base station in communication with the mobile station performing the multislot class 34 DTM transfer sends an uplink state flag (USF) **530** to inform the mobile station of which timeslots to use to transfer packet-switched data in the next uplink block n+1 **550.** In this example, the USF **530** indicates that three uplink packet-switched timeslots are allowed. This would be less than the maximum number of uplink packet-switched timeslots allowed in multislot class 34. In this situation, the mobile station "listens" for signaling data on the timeslot **590** following the circuit-switched timeslot 3 of the next receive block n+1 **543** before switching from receive mode to transmit mode during time period T_{tb} **540,** and then transmits on circuit-switched timeslot **3 560** and packet-switched timeslots **586, 584, 582** before switching back to receive mode during time period Tᵣₐ **570.**

As in FIG. 4, the USF **530** is transmitted on the downlink circuit-switched timeslot of the dedicated voice channel as one or more training sequences in accordance with 3GPP TS 45.002 section 5.2.3, which specifies eight training code sequences. Thus, each training code sequence can also be used to provide a USF with a value (N) encoded into the USF **530** that indicates how many packet-switched timeslots are available to the mobile station during the next block period. In this example, a USF **530** with N=3 is received during block n **510** of the downlink stream **503** and thus the mobile station "listens" during the first available downlink timeslot **590** in the next block n+1 **543** and transmits on the other three available uplink packet-switched timeslots **586, 584, 582** of the next block n+1 **550** in the uplink stream **506.** When fewer than the maximum number of slots (Sum, shown in FIG. 14) for a particular multislot class is available according to the number N of the USF, packet-switched data is sent on the latter timeslots of the next block **550.** This allows the mobile station to "listen" for signaling data an earlier timeslot of the next block **543.**

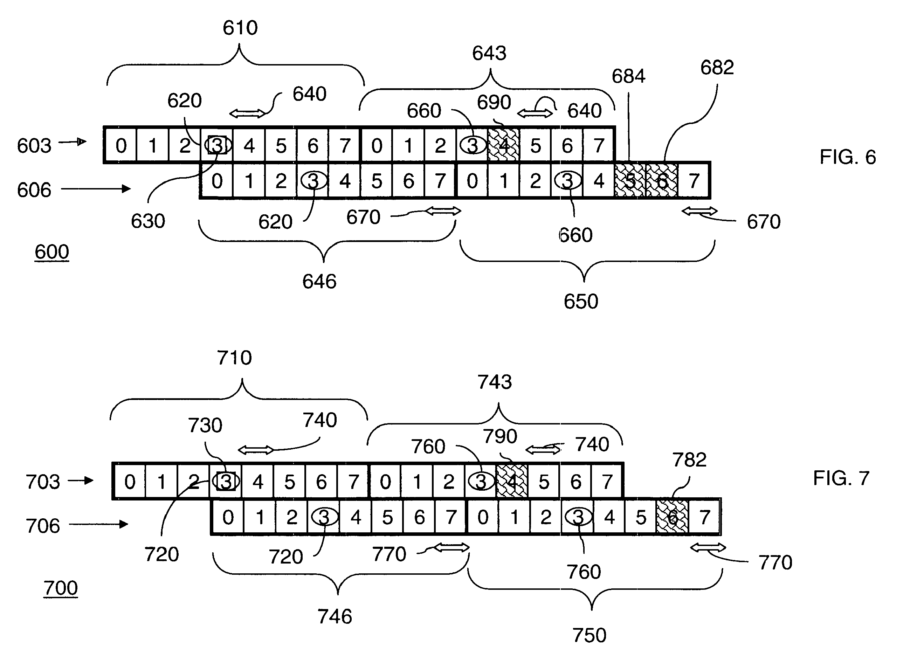

FIG. 6 shows an example **600** of an ongoing multislot class 34 dual transfer mode (DTM) transfer allowing a downlink circuit-switched timeslot, an uplink circuit-switched timeslot, and two uplink packet-switched timeslots in accordance with a sixth preferred embodiment. Like FIG. 4, FIG. 6 shows a GSM receive stream **603** with a block n **610** of eight timeslots 0-7 and one subsequent block n+1 **643.** For the sake of clarity, other receive blocks are not shown. Each receive block has a circuit-switched timeslot 620 on timeslot 3. Also shown is a GSM transmit stream **606** with a block n+1 **650** of eight timeslots 0-7 and one previous block n **646.** For the sake of clarity, other transmit blocks are not shown. Each transmit block also has a circuit-switched timeslot **660** on timeslot 3. Note that the transmit stream **606** is offset from the receive stream **603** such that timeslot 0 of the transmit stream **606** is aligned with timeslot 3 of its equivalent block in the receive stream **603.** For the duration of the communication session in this example, a dedicated voice channel will be implemented on the circuit-switched timeslot 3 of both the transmit and receive streams. Also, a base station in communication with the mobile station performing the multislot class 34 DTM transfer allocates uplink timeslots 2, 4, 5, and 6 as packet-switched timeslots in a first assignment allocation.

During the circuit-switched timeslot **620,** the base station sends an uplink state flag (USF) **630** to inform the mobile station of which timeslots to use to transfer packet-switched data in the next uplink block n+1 **650.** In this example, the USF **630** indicates that two uplink packet-switched timeslots are allowed. This would be less than the maximum number of uplink packet-switched timeslots allowed in multislot class 34. In this situation, the mobile station "listens" for signaling data on the timeslot 690 following the circuit-switched timeslot 3 of the next receive block n+1 **643** before switching from receive mode to transmit mode during time period T_{tb} **640,** before transmitting on circuit-switched timeslot 3 **660** and the latter two packet-switched timeslots **684, 682** before switching back to receive mode during time period Tᵣₐ **670.**

As in FIG. 4, the USF **630** is transmitted on the downlink circuit-switched timeslot of the dedicated voice channel as one or more training sequences in accordance with 3GPP TS 45.002 section 5.2.3. A value (N) encoded into the USF **630** indicates how many packet-switched timeslots are available to the mobile station during the next block period. In this example, a USF **630** with N=2 is received during block n **610** of the downlink stream **603** and thus the mobile station "listens" during the first available downlink timeslot **690** and transmits on the latter two available uplink packet-switched timeslots **684, 682** of the next block n+1 **650** in the uplink stream **606.** When fewer than the maximum number of slots (Sum, shown in FIG. 14) for a particular multislot class is available according to the number N of the USF, packet-switched data is sent on the latter timeslots of the next block **650.** This allows the mobile station to "listen" for signaling data an earlier timeslot of the next block **643.**

FIG. 7 shows an example **700** of an ongoing multislot class 34 dual transfer mode (DTM) transfer allowing a downlink circuit-switched timeslot, an uplink circuit-switched timeslot, and one uplink packet-switched timeslot in accordance with a seventh preferred embodiment. Like FIG. 4, FIG. 7 shows a GSM receive stream **703** with a block n 710 of eight timeslots 0-7 and one subsequent block n+1 **743.** Each receive block has a circuit-switched timeslot **720** on timeslot 3. Also shown is a GSM transmit stream **706** with a block n+1 **750** of eight timeslots 0-7 and one previous block n **746.** Each transmit block also has a circuit-switched timeslot **760** on timeslot 3. For the duration of the communication session in this example, a dedicated voice channel will be implemented on the circuit-switched timeslot 3 of both the transmit and receive streams. Also, a base station in communication with the mobile station performing the multislot class 34 DTM transfer allocates uplink timeslots 2, 4, 5, and 6 as packet-switched timeslots in a first assignment allocation.

During the circuit-switched timeslot **720**, the base station sends an uplink state flag (USF) **730** to inform the mobile station of which timeslots to use to transfer packet-switched data in the next uplink block n+1 **750**. In this example, the USF **730** indicates that one uplink packet-switched timeslot is allowed. This would be less than the maximum number of uplink packet-switched timeslots allowed in multislot class 34. In this situation, the mobile station "listens" for signaling data on the timeslot 790 following the circuit-switched timeslot 3 of the next receive block n+1 **743** before switching from receive mode to transmit mode during time period T_{tb} **740,** before transmitting on circuit-switched timeslot 3 **760** and packet-switched timeslot **782** of block **750** before switching back to receive mode during time period Tᵣₐ 770.

As in FIG. 4, the USF **730** is transmitted on the downlink circuit-switched timeslot of the dedicated voice channel as one or more training sequences. In this example, a USF **730** with N=1 is received during block n 710 of the downlink stream **703** and thus the mobile station "listens" during the first available downlink timeslot **790** and transmits on the last of the three remaining uplink packet-switched timeslots **782** of the next block n+1 **750** in the uplink stream **706**. When fewer than the maximum number of slots (Sum, shown in FIG. 14) for a particular multislot class is available according to the number N of the USF, packet-switched data is sent on the latter timeslots of the next block **750**. This allows the mobile station to "listen" for signaling data an earlier timeslot of the next block **743**.

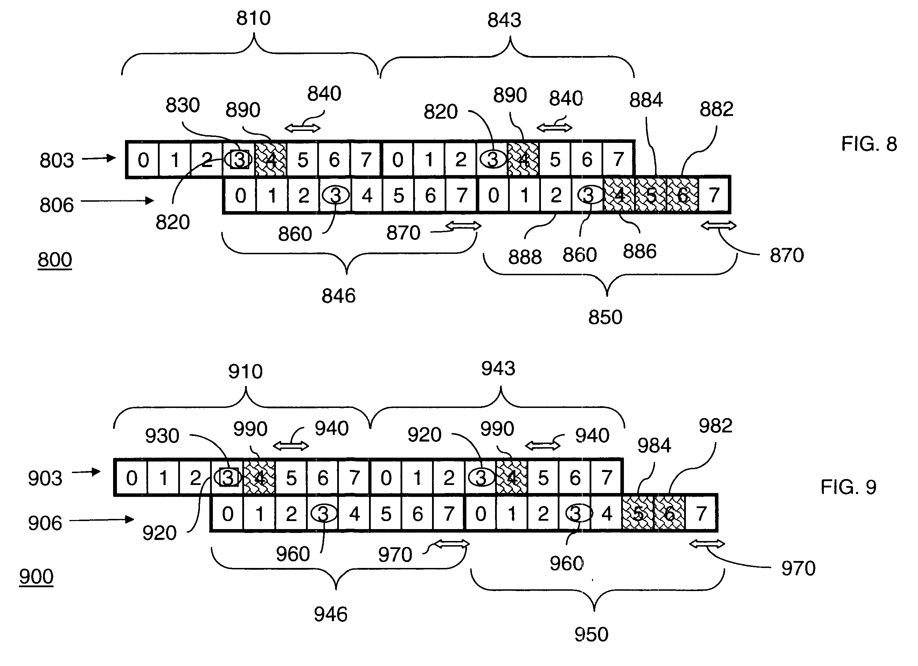

FIG. 8 shows an example **800** of an ongoing multislot class 33 or 34 DTM transfer allowing a downlink circuit-switched timeslot, an uplink circuit-switched timeslot, three uplink packet-switched timeslots, and one downlink packet-switched timeslot in accordance with an eighth preferred embodiment. Similar to FIG. 5, FIG. 8 shows a GSM receive stream **803** with a block n **810** of eight timeslots 0-7 and one subsequent block n+1 **843.** Each receive block has a circuit-switched timeslot **820** on timeslot 3 and a packet-switched timeslot 890 on timeslot 4. In contrast with FIG. 5, the downlink packet-switched timeslots 890 are permanently allocated during each block **810, 843** rather than optional. Also shown is a GSM transmit stream **806** with a block n+1 **850** of eight timeslots 0-7 and one previous block n **846.** Each transmit block also has a circuit-switched timeslot **860** on timeslot 3. Note that the transmit stream **806** is offset from the receive stream **803** such that timeslot 0 of the transmit stream **806** is aligned with timeslot 3 of its equivalent block in the receive stream **803.** For the duration of the communication session in this example, a dedicated voice channel will be implemented on the circuit-switched timeslot 3 of both the transmit and receive streams. For the duration of the communication session in this example, a downlink data transfer will be implemented on the packet-switched timeslot 4 of the receive stream **803.** Also, an uplink data transfer can be implemented on uplink timeslots 4, 5, and 6.

During the circuit-switched timeslot **820,** the base station in communication with the mobile station performing the multislot class 33 or 34 DTM transfer sends an uplink state flag (USF) **830** to inform the mobile station of which timeslots to use to transfer packet-switched data in the next uplink block n+1 **850.** In this example, the USF **830** indicates that three uplink packet-switched timeslots are allowed. This would be the maximum number of uplink packet-switched timeslots allowed by the first assignment allocation of the base station. With respect to multislot classes 33 and 34, three uplink packet-switched timeslots plus the dedicated downlink packet-switched timeslot plus the two dedicated circuit-switched timeslots results in the maximum allowed number of downlink plus uplink slots (Sum = 6 as shown in FIG. 14). In this situation, the mobile station "listens" for packet-switched data potentially including signaling data on timeslot 4 **890** before switching from receive mode to transmit mode during time period T_{tb} **840,** and then transmits on circuit-switched timeslot 3 **860** and packet-switched timeslots **886, 884, 882** before switching back to receive mode during time period Tᵣₐ **870.**

As in FIG. 5, the USF **830** is transmitted on the downlink circuit-switched timeslot of the dedicated voice channel as one or more training sequences in accordance with 3GPP TS 45.002 section 5.2.3. A value (N) encoded into the USF **830** indicates how many packet-switched timeslots are available to the mobile station during the next block period. In this example, a USF **830** with N=3 is received during block n **810** of the downlink stream **803.** Thus the mobile station transmits on the three available uplink packet-switched timeslots **886, 884, 882** of the next block n+1 **850** in the uplink stream **806.**

FIG. 9 shows an example **900** of an ongoing multislot class 33 or 34 DTM transfer allowing a downlink circuit-switched timeslot, an uplink circuit-switched timeslot, two uplink packet-switched timeslots and one downlink packet-switched timeslot in accordance with a ninth preferred embodiment. Like FIG. 8, FIG. 9 shows a GSM receive stream **903** with a block n **910** of eight timeslots 0-7 and one subsequent block n+1 **943.** Each receive block has a circuit-switched timeslot **920** on timeslot 3 and a packet-switched timeslot **990** on timeslot 4. In contrast with FIG. 5, the downlink packet-switched timeslots **990** are permanently allocated during each block **910, 943** rather than optional. Also shown is a GSM transmit stream **906** with a block n+1 **950** of eight timeslots 0-7 and one previous block n **946.** Each transmit block also has a circuit-switched timeslot **960** on timeslot 3. Note that the transmit stream **906** is offset from the receive stream **903.** For the duration of the communication session in this example, a dedicated voice channel will be implemented on the circuit-switched timeslot 3 of both the transmit and receive streams. For the duration of the communication session in this example, a downlink data transfer will be implemented on the packet-switched timeslot 4 of the receive stream **903.** Also, an uplink data transfer can be implemented on uplink timeslots 4, 5 and 6.

During the circuit-switched timeslot **920** of downlink block **910,** the base station in communication with the mobile station performing the multislot class 33 or 34 DTM transfer sends an uplink state flag (USF) **930** to inform the mobile station of which timeslots to use to transfer packet-switched data in the next uplink block n+1 **950.** In this example, the USF **930** indicates that two uplink packet-switched timeslots are allowed. This would be less than the maximum number of uplink packet-switched timeslots allowed by the first assignment allocation of the base station. In this situation, the mobile station "listens" for packet-switched data (potentially including signaling data) on the timeslot 4 **990** following the circuit-switched timeslot 3 of the next receive block n+1 **943** before switching from receive mode to transmit mode during time period T_{tb} **940,** before transmitting on circuit-switched timeslot 3 **960** and packet-switched timeslots **984, 982** before switching back to receive mode during time period Tᵣₐ **970.** Although the mobile station already "listens" for downlink data during a timeslot **990** of the next block **943,** this example still shows the transmission of data on the latter available timeslots of the next uplink block **950.**

As in FIG. 8, the USF **930** is transmitted on the downlink circuit-switched timeslot of the dedicated voice channel as one or more training sequences in accordance with 3GPP TS 45.002 section 5.2.3. A value (N) encoded into the USF **930** indicates how many packet-switched timeslots are available to the mobile station during the next block period. In this example, a USF **930** with N=2 is received during block n **910** of the downlink stream **903.** Thus the mobile station transmits on the latter two timeslots **984, 982** of the three available uplink packet-switched timeslots of the next block n+1 950 in the uplink stream **906.**

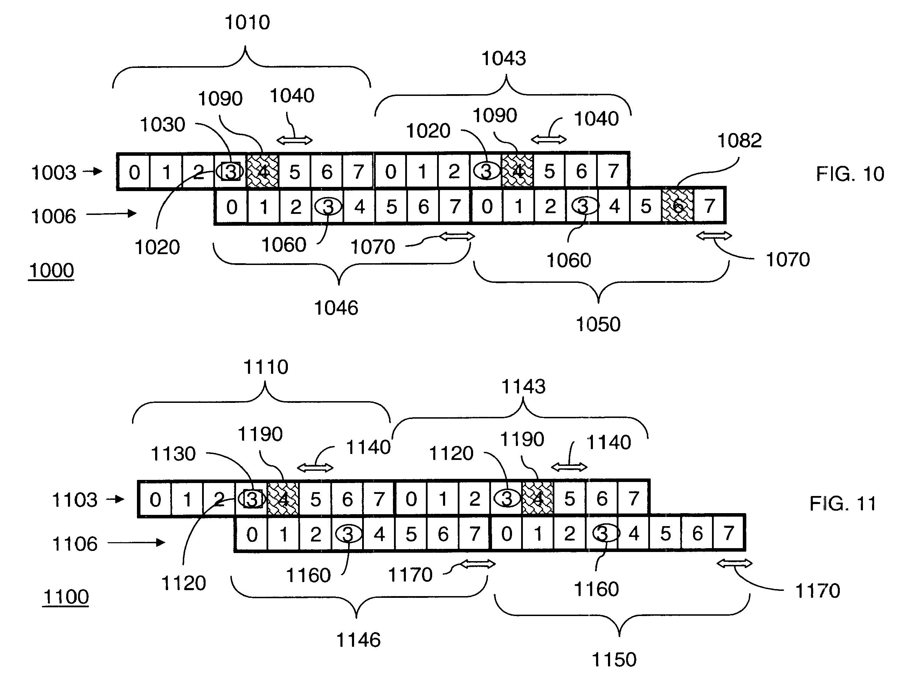

FIG. 10 shows an example **1000** of an ongoing multislot class 33 or 34 DTM transfer allowing a downlink circuit-switched timeslot, an uplink circuit-switched timeslot, one uplink packet-switched timeslot, and one downlink packet-switched timeslot in accordance with a tenth preferred embodiment. Like FIG. 8, FIG. 10 shows a GSM receive stream **1003** with a block n **1010** of eight timeslots 0-7 and one subsequent block n+1 **1043.** Each receive block has a circuit-switched timeslot **1020** on timeslot 3 and a packet-switched timeslot **1090** on timeslot 4. Also shown is a GSM transmit stream **1006** with a block n+1 **1050** of eight timeslots 0-7 and one previous block n **1046.** Each transmit block also has a circuit-switched timeslot **1060** on timeslot 3. For the duration of the communication session in this example, a dedicated voice channel will be implemented on the circuit-switched timeslot 3 of both the transmit and receive streams. For the duration of the communication session in this example, a downlink data transfer will be implemented on the packet-switched timeslot 4 of the receive stream **1003.** Also, an uplink data transfer can be implemented on uplink timeslots 4, 5 and 6.

During the circuit-switched timeslot **1020,** the base station in communication with the mobile station performing the multislot class 33 or 34 DTM transfer sends an uplink state flag (USF) **1030** to inform the mobile station of which timeslots to use to transfer packet-switched data in the next uplink block **n+1 1050.** In this example, the USF **1030** indicates that one uplink packet-switched timeslot is allowed. This would be less than the maximum number of uplink packet-switched timeslots allowed by the first assignment allocation of the base station. In this situation, the mobile station "listens" for packet-switched data potentially including signaling data on the timeslot **41090** of the next downlink block **1043** before switching from receive mode to transmit mode during time period T_{tb} **1040,** before transmitting on circuit-switched timeslot **31060** and packet-switched timeslot **1082** before switching back to receive mode during time period **T**_{**ra**} **1070.**

As in FIG. 8, the USF **1030** is transmitted on the downlink circuit-switched timeslot of the dedicated voice channel as one or more training sequences in accordance with 3GPP TS 45.002 section 5.2.3. A value (N) encoded into the USF **1030** indicates how many packet-switched timeslots are available to the mobile station during the next block period. In this example, a USF **1030** with N=1 is received during block n **1010** of the downlink stream **1003** and thus the mobile station transmits on the last timeslot **1082** of the three available uplink packet-switched timeslots of the next block **n+1 1050** in the uplink stream **1006.** Although the mobile station already "listens" for downlink data during a timeslot **1090** of the next block **1043,** this example still shows the transmission of data on the latter available timeslots of the next uplink block **1050.**

FIG. 11 shows an example **1100** of an ongoing multislot class 33 or 34 DTM transfer allowing a downlink circuit-switched timeslot, an uplink circuit-switched timeslot, no uplink packet-switched timeslots, and one downlink packet-switched timeslot in accordance with an eleventh preferred embodiment. This example is applicable to situations where (1) a USF is received with N=0; (2) a received USF is not decoded properly; or (3) no USF is received. By not allowing uplink packet-switched timeslots in these situations, the mobile station only transmits when it understand that it has been granted the right to transmit. If a received USF is not decoded properly (i.e., the mobile station had a right to transmit but did not), dynamic allocation allows the base station to retransmit the same USF in the next available downlink block.

Like FIG. 8, FIG. 11 shows a GSM receive stream **1103** with a block n **1110** of eight timeslots 0-7 and one subsequent block n+1 **1143**. Each receive block has a circuit-switched timeslot **1120** on timeslot 3 and a packet-switched timeslot **1190** on timeslot 4. Also shown is a GSM transmit stream **1106** with a block n+1 **1150** of eight timeslots 0-7 and one previous block n **1146.** Each transmit block also has a circuit-switched timeslot **1160** on timeslot 3. For the duration of the communication session in this example, a dedicated voice channel will be implemented on the circuit-switched timeslot 3 of both the transmit and receive streams. For the duration of the communication session in this example, a downlink data transfer will be implemented on the packet-switched timeslot 4 of the receive stream **1103.** Also, an uplink data transfer can be implemented on uplink timeslots 4, 5 and 6.

During the circuit-switched timeslot **1120**, the base station in communication with the mobile station performing the multislot class 33 or 34 DTM transfer sends an uplink state flag (USF) **1130** to inform the mobile station of which timeslots to use to transfer packet-switched data in the next uplink block **n+1 1150.** In this example, the USF **1130** indicates that no uplink packet-switched timeslot is allowed. This example **1100** is useful when the uplink timeslots are reserved for another mobile station. Alternately, the USF **1130** many indicate a non-zero number of allowable uplink packet-switched timeslots, but the mobile station does not properly receive or decode the USF **1130.**

As in FIG. 8, the USF **1130** is transmitted on the downlink circuit-switched timeslot of the dedicated voice channel as one or more training sequences in accordance with 3GPP TS 45.002 section 5.2.3. A value (N) encoded into the USF **1130** indicates how many packet-switched timeslots are available to the mobile station during the next block period. In this example, a USF **1130** with N=0 is received during block n **1110** of the downlink stream **1103** and thus the mobile station "listens" for packet-switched data on timeslot **1190** in block **1143,** switches from receive mode to transmit mode during time period T_{tb} **1140,** transmits on circuit-switched timeslot **31160** of block **1150,** but does not transmit on any of the three available uplink packet-switched timeslots 4, 5, or 6 of block **n+1 1150** in the uplink stream **1106** and simply switches back to receive mode during time period Tᵣₐ **1170.**

If the base station does not send a USF during the circuit-switched downlink timeslot **1120,** or the USF **1130** is improperly received or decoded at the mobile station, the mobile station still "listens" for packet-switched data on timeslot **1190** in block **1143,** switches from receive mode to transmit mode during time period T_{tb} **1140,** transmits on circuit-switched timeslot 3 **1160** of block **1150,** does not transmit on any of the three available uplink packet-switched timeslots 4, 5, or 6 of block n+1 **1150** in the uplink stream **1106,** and simply switches back to receive mode during time period Tᵣₐ **1170.**

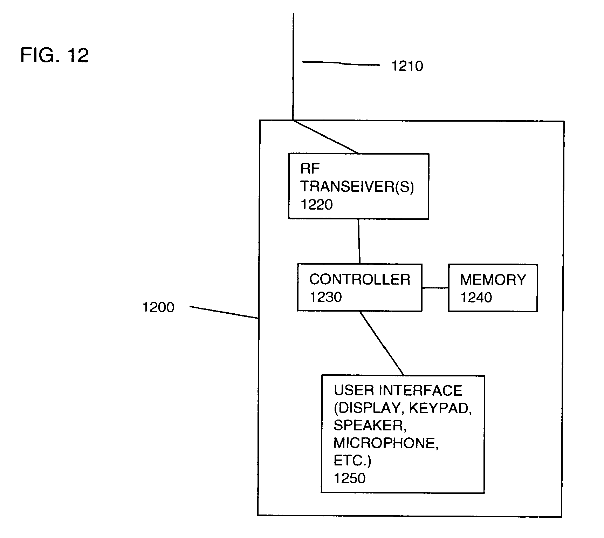

FIG. 12 shows an exemplary simplified block diagram of a mobile station **1200** capable of implementing the DTM transfers shown in FIGs. 1-11. The mobile station **1200** includes an antenna **1210** for transmitting and receiving radio frequency waves. One or more transceivers **1220** couples to the antenna **1210** for received and transmitting radio frequency signals under the direction of a controller **1230.** The controller **1230** is generally coupled to a memory **1240** for storing data and computer software programs. The controller **1230** is also coupled to a user interface **1250** that includes standard components such as a display, a keypad, a speaker, a microphone, and the like.

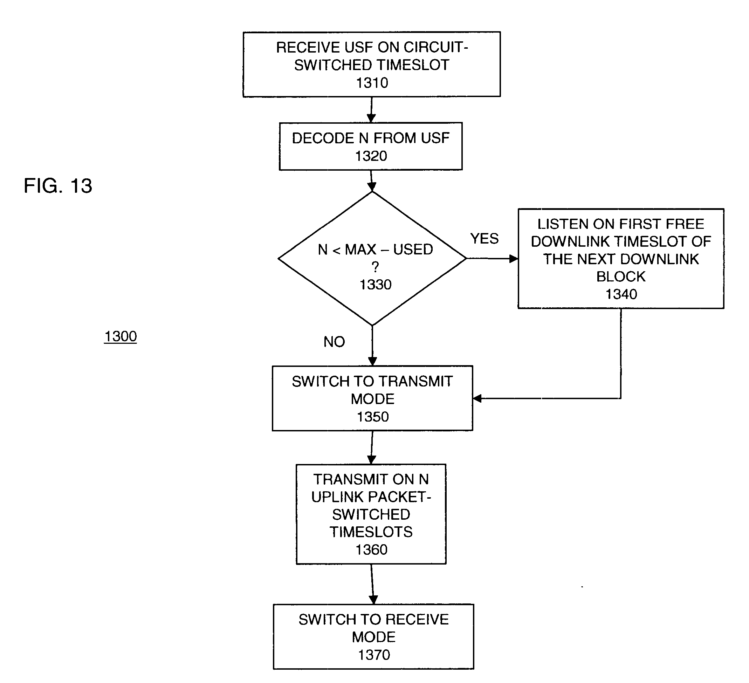

FIG. 13 shows an exemplary flowchart **1300** for implementing the DTM transfers shown in FIGs. 1-11 in the mobile station shown in FIG. 12. When the mobile station receives **1310** an uplink state flag (USF) on a circuit-switched timeslot, the mobile station decodes **1320** the number N indicating the number of packet-switched timeslots available to the mobile station during the next uplink block period. If the mobile station determines **1330** that the number N is less than the maximum number of slots (Sum, shown in FIG. 14) allowed in a block for the current base station allocation and if no downlink timeslot is already allocated for downlink data transfer, the mobile station listens **1340** on the first free downlink timeslot of the next downlink block. Note that, according to the 3GPP specifications, this free timeslot will always be the timeslot following the circuit switched timeslot. After listening to downlink timeslots as appropriate, the mobile station switches **1350** to transmit mode. Next, the mobile station transmits **1360** on N uplink packet-switched timeslots and switches **1370** to receive mode to await further downlink communications.

According to an embodiment, if the number N is less than the maximum number of slots allowed in a block for the current multislot class of the mobile station, the mobile station transmits on the N latter timeslots of the available packet-switched timeslots.

FIG. 14 is a prior art chart **1400** showing the forty-five multislot classes currently in 3GPP TS 45.002 Annex B. Although multislot classes 12 and above were developed for non-DTM capable mobile stations, these classes can be extended and applied to DTM capable mobiles using the principles disclosed. These principles allow multislot classes above 11 to be implemented by DTM capable mobile stations.

Although the examples shown in FIGs. 1-11 are full-rate dedicated traffic channel communications, the principles disclosed can be applied to half-rate dedicated traffic channel communications. In half rate speech, the USF will be coded on two bursts instead of four in full rate speech.

Additionally, although USFs are proposed to be encoded as training sequences in accordance with 3GPP TS 45.002 section 5.2.3, alternate USF implementations during the circuit-switched timeslot can replace the implementation described.

While this disclosure includes what are considered presently to be the preferred embodiments and best modes of the invention described in a manner that establishes possession thereof by the inventors and that enables those of ordinary skill in the art to make and use the invention, it will be understood and appreciated that there are many equivalents to the preferred embodiments disclosed herein and that modifications and variations may be made without departing from the scope and spirit of the invention, which are to be limited not by the preferred embodiments but by the appended claims, including any amendments made during the pendency of this application and all equivalents of those claims as issued.

It is further understood that the use of relational terms such as first and second, top and bottom, and the like, if any, are used solely to distinguish one from another entity, item, or action without necessarily requiring or implying any actual such relationship or order between such entities, items or actions. Much of the inventive functionality and many of the inventive principles are best implemented with or in software programs or instructions. It is expected that one of ordinary skill, notwithstanding possibly significant effort and many design choices motivated by, for example, available time, current technology, and economic considerations, when guided by the concepts and principles disclosed herein will be readily capable of generating such software instructions and programs with minimal experimentation. Therefore, further discussion of such software, if any, will be limited in the interest of brevity and minimization of any risk of obscuring the principles and concepts according to the present invention.

As understood by those in the art, controller 1230 includes a processor that executes computer program code to implement the methods described herein. Embodiments include computer program code containing instructions embodied in tangible media, such as floppy diskettes, CD-ROMs, hard drives, or any other computer-readable storage medium, wherein, when the computer program code is loaded into and executed by a processor, the processor becomes an apparatus for practicing the invention. Embodiments include computer program code, for example, whether stored in a storage medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

## Claims

1. A method for uplink resource allocation in dual transfer mode in a mobile station comprising:
receiving an uplink state flag during a circuit switched downlink timeslot;
decoding a number N of packet-switched timeslots available during a next uplink period;
switching to transfer mode; and
transmitting on no greater than N packet-switched timeslots in the next uplink period.

2. The method according to claim 1 wherein the step of transmitting comprises:
transmitting fewer than N timeslots of data.

3. The method according to claim 1 wherein the step of transmitting comprises:
transmitting on a latter N timeslots available during the next uplink period.

4. The method according to claim 1 comprising:
"listening" on a timeslot following a next circuit-switched downlink timeslot.

5. The method according to claim 1, wherein decoding comprises:
decoding a training sequence.

6. The method according to claim 1 comprising:
switching to receive mode after transmitting.

7. The method according to claim 1 wherein the number N is encoded into the uplink state flag.

8. The method according to claim 1 wherein the next uplink period is a subsequent uplink block.

9. The method according to claim 1 comprising:
determining if N is less than a maximum number of timeslots that can actually be used by the mobile station during the next uplink period.

10. The method according to claim 1 comprising:
determining if N is less than the maximum number of timeslots that can actually be used by the mobile station during the next uplink period minus any previously allocated timeslots.

11. An uplink state flag comprising:
a training sequence for a dedicated voice channel.

12. An uplink state flag according to claim 11 comprising:
a number N indicating a number of packet-switched timeslots available to a receiving mobile station during a next uplink transmission period.

## Amended claims

### Amended claims in accordance with Rule 86(2) EPC.

**1.** A method for uplink resource allocation in dual transfer mode in a mobile station comprising receiving (1310) an uplink state flag (USF) during a circuit switched downlink timeslot, **characterized in that** it comprises:
- decoding (1320) from the uplink state flag (USF) a number N indicating the number of of packet-switched timeslots available during a next uplink period;
- switching (1350) to transfer mode; and
- transmitting (1360) on no greater than N packet-switched timeslots in the next uplink transmission period.

**2.** The method according to claim 1 wherein the step of transmitting (1360) comprises:
transmitting fewer than N timeslots of data.

**3.** The method according to claim 1 wherein the step of transmitting (1360) comprises:
transmitting on a latter N timeslots available during the next uplink transmission period.

**4.** The method according to claim 1 comprising:
"listening" (1340) on a timeslot following a next circuit-switched downlink timeslot.

**5.** The method according to claim 1, wherein decoding (1320) comprises:
decoding a training sequence for a circuit switched timeslot.

**6.** The method according to claim 1 comprising:
switching (1370) to receive mode after transmitting.

**7.** The method according to claim 1 wherein the next uplink period is a subsequent uplink block.

**8.** The method according to claim 1 comprising:
determining (1330) if said number N of packet-switched timeslots N is less than a maximum number of timeslots that can actually be used by the mobile station during the next uplink transmission period.

**9.** The method according to claim 1 comprising:
determining (1330) if said number N of a packet-switched timeslots is less than the maximum number of timeslots that can actually be used by the mobile station during the next uplink transmission period minus any previously allocated timeslots.

**10.** An uplink state flag (USF) comprising:
a training sequence for a circuit switched timeslot, **characterized in that** it comprises a number N indicating a number of packet-switched timeslots available to a receiving mobile station during a next uplink transmission period.
